Europäisches Patentamt

European Patent Office

Office européen des brevets

(11) Publication number: **0 254 485**
**A1**

## EUROPEAN PATENT APPLICATION

(21) Application number: **87306306.9**

(22) Date of filing: **16.07.87**

(51) Int. Cl.⁴: **A01K 93/00**

(30) Priority: **17.07.86 JP 110262/86 U**
**14.05.87 JP 118335/87**

(43) Date of publication of application:
**27.01.88 Bulletin 88/04**

(84) Designated Contracting States:
**DE FR GB IT NL SE**

(71) Applicant: **Kabushiki Kaisha Kiya Kosakusho**
**8-1-3, Sakaedani-machi**
**Kaga-shi Ishikawa-ken(JP)**

(72) Inventor: **Kiya, Noriyasu**
**ru 51-1, Uwabara-machi Yamanaka-machi**
**Enuma-gun Ishikawa-ken(JP)**

(74) Representative: **Deans, Michael John Percy et al**
**Lloyd Wise, Tregear & CO. Norman House**
**105-109 Strand**
**London WC2R OAE(GB)**

㉔ Float.

㊗ A float has a hollow body which is formed of a synthetic resin material and accommodates one or more electric batteries providing power to a motor coupled to a propeller screw which propels the float. The chamber (21) or holder for the batteries is provided eccentrically of a generally cylindrical portion of the body in a region which forms a vertically lower region in the floating orientation of the float. A motor chamber (31) is provided in the tail portion of the body contiguously with the battery chamber or holder. An air chamber (37) extends axially to the rear of the motor chamber (31) and has a boundary wall which is generally parallel to the longitudinal diametric plane of the cylindrical portion of the body. In the floating orientation this boundary wall forms a horizontal bottom wall to the air chamber (37) extension which lies above the horizontal medial plane of the cylindrical portion. Extending laterally of the float body in the region of the extended air chamber (37) are tailplanes which in the floating orientation are horizontal. A tail fin (36) projects from the boundary wall perpendicularly to the tailplanes in a direction which is vertically downward in the floating orientation.

FIG. 1

FIG. 6

# FLOAT.

This invention relates to improvements in floats which may be used, for example, in rod fishing on the sea, lakes or rivers.

In casting using a float, particularly in long range casting, difficulties are often experienced in throwing a fishing line in the aimed direction, in addition to problems such as entanglement of the line and detachment of bait from hooks.

For the purpose of carrying a fishing line to an aimed direction, there have been proposed self-propelling floats, for example, in Japanese Utility Model Publications 6l-787 and 49-794.

The float described in the above-mentioned Japanese Utility Model Publication 6l-787 consists of a float and a separate carrier with a propeller, as described in more detail herein below with reference to Figs. l3 and l4 of the drawings accompanying the present application. The said float suffers from problems. Specifically, in wavy and rolling water such as the sea, the float may stop before reaching the point aimed at. Additionally, even if the float is stopped at the desired position, the fisherman may find it difficult to keep watch on the float in wavy or rough conditions.

As explained in more detail hereinbelow with reference to Fig. l5 of the drawings accompanying the present application, Japanese Utility Model Publication 49-794 describes a float body which has a battery and a motor for driving a screw propeller which urges the float body in a direction determined by a rudder. This float also suffers from the difficulty that in conditions of wave or wind, the float body may stop before it has reached the position aimed for. Additionally, the float body may deviate from the desired direction as a result of the fishing line becoming entangled with the screw.

The present invention has arisen from our work seeking to provide improved embodiments of float better able to operate in difficult conditions such as wind or wave.

In accordance with the present invention, we provide a float comprising a hollow body formed of a synthetic resin material, and adapted to accommodate one or more batteries therewithin, and a motor accommodated within the body and coupled to a propeller screw for propelling said float; characterised in that a battery chamber or holder for accommodating said battery is provided eccentrically of a generally cylindrical portion of said body in a region which forms a vertically lower region of said cylindrical portion in use of the float; in that a motor chamber accommodating said motor is provided in a tail portion of said body contiguously with said battery chamber or holder; in that an air chamber extends axially to the rear of said motor chamber and has a boundary generally parallel to a longitudinal diametric plane of said cylindrical portion, and forming in use of the float a horizontal bottom wall to said air chamber extension above the horizontal medial plane of the cylindrical portion; in that tailplanes extend laterally of the float body in the region of said extended air chamber in directions which are horizontal in use of the float; and in that a tail fin projects from said boundary wall perpendicularly to said tailplanes in a direction which is vertically downward in use of the float.

The invention is hereinafter more particularly described by way of example only with reference to the accompanying drawings in which:-

Fig. l is a schematic side elevational view of an embodiment of float constructed in accordance with the present invention;

Fig. 2 is a similar side elevational view of the head and body portions of the float of Fig. l;

Fig. 3 is a longitudinal section of the head and body portions of Fig. 2;

Fig. 4 is a schematic front elevational view of the head portion of the float of Figs. l to 3;

Fig. 5 is a sectional view taken on line A-A of Fig. 3;

Fig. 6 is a schematic sectional view of the tail portion of the float of Fig. l;

Fig. 7 is a sectional view taken on line B-B of Fig. 6;

Fig. 8 is a view similar to Fig. l but showing another embodiment of float also constructed in accordance with the present invention;

Fig. 9 is a schematic rear elevational view taken from the tail end of the float of Fig. 8;

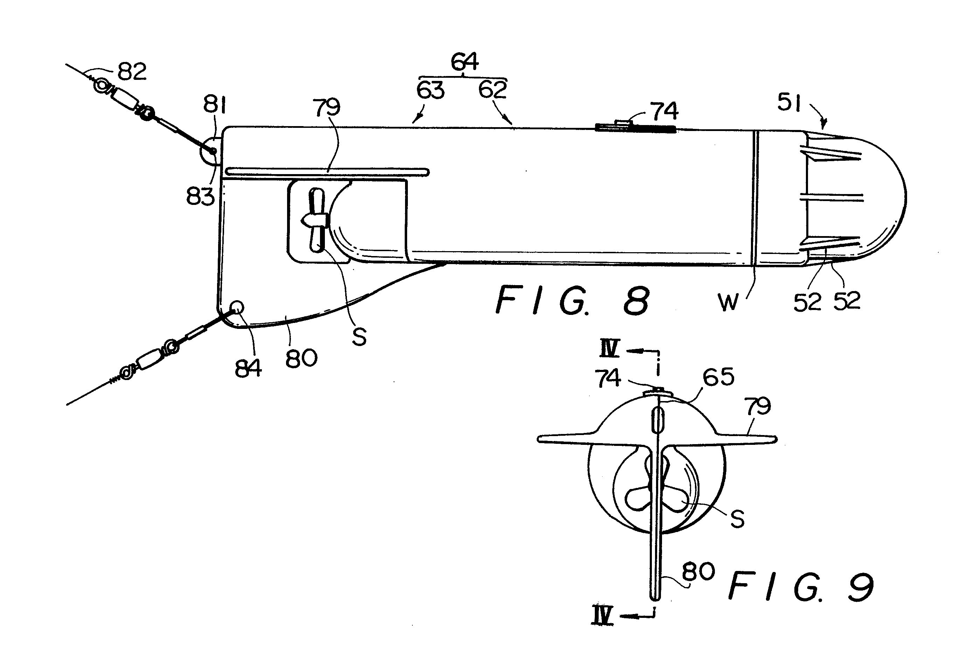

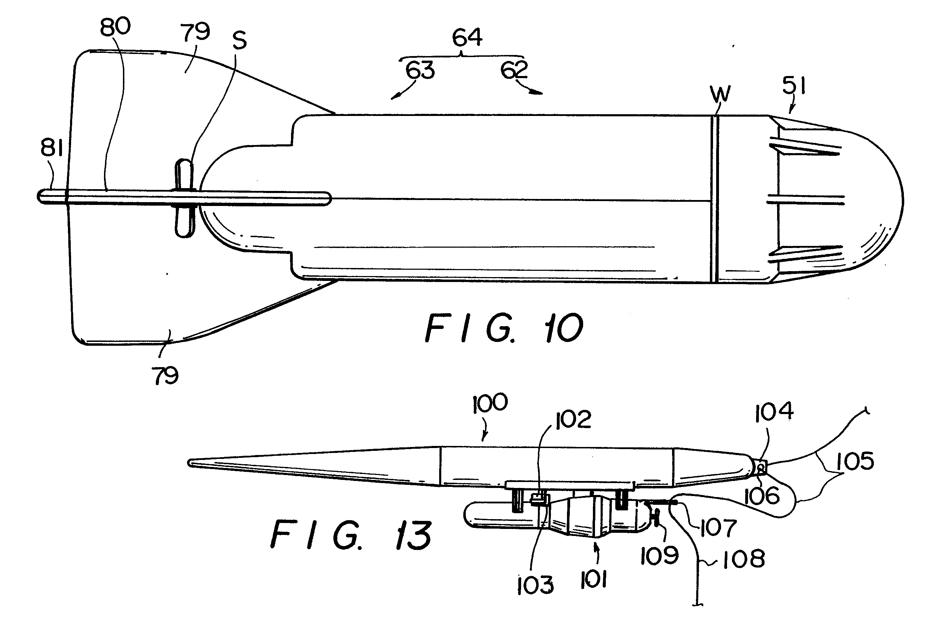

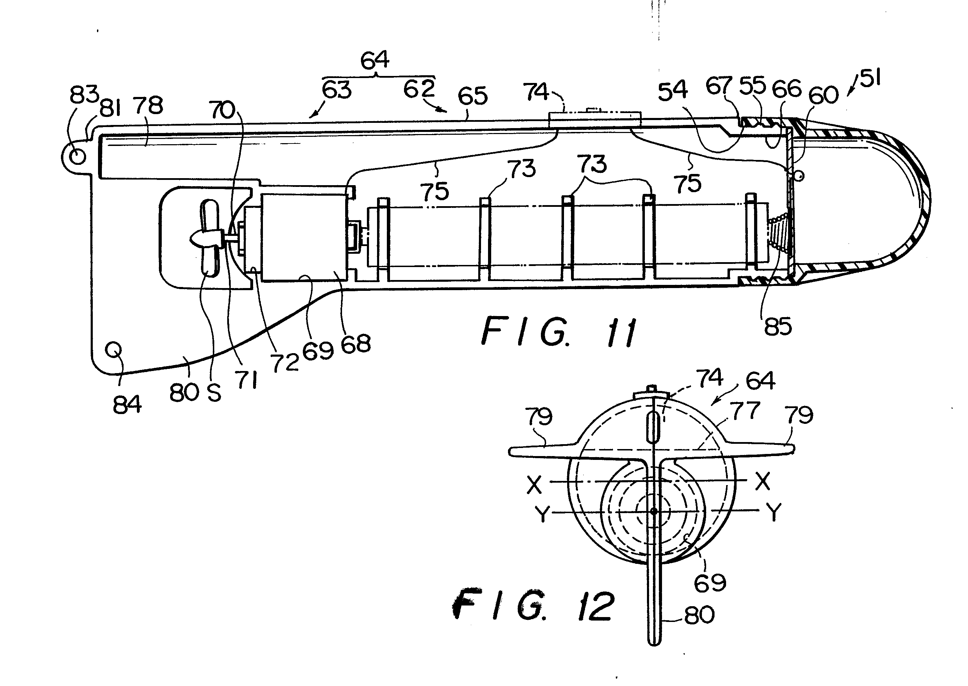

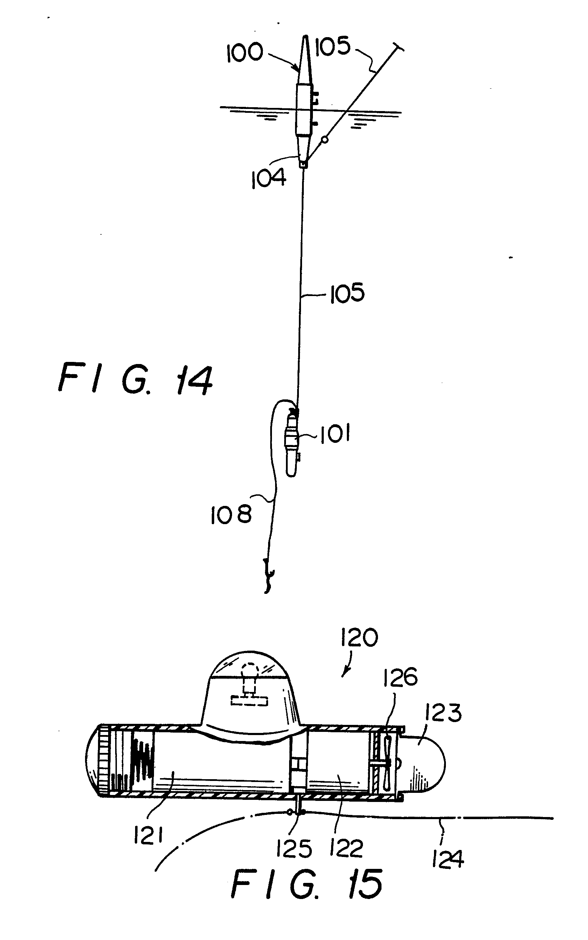

Fig. l0 is a schematic underneath plan view of the float of Figs. 8 and 9;

Fig. ll is a schematic side view of the float of Figs. 8 to l0 sectioned and partly cutaway in its head and body portions;

Fig. l2 is a schematic rear elevational view employed for the explanation of the relationships between tailplanes, vertical fin, cylindrical body section, battery holder and motor chamber;

Fig. l3 is a schematic side view of a previously proposed self-propelling float;

Fig. l4 is a schematic illustration showing the float of Fig. l3 in use; and

Fig. l5 is a part sectional view of another previously proposed self-propelling float.

Referring first to Figs. l3 and l4 which shows a float of the kind described in the above-mentioned Japanese Utility Model Publication 6l-787. It will be seen that the float comprises a float proper l00 and a separate carrier l0l with a propeller screw l09. A

fishing line 105 is passed through a hole 106 in the projection 104 of the float 100 and is attached to a projection 107 which is provided on the carrier 101 and which also has a trace 108 attached thereto. The float 100 is connected to the carrier 101 by engagement of a suspension member 102 fixed to the float 100 and a cooperating clip member 103 provided on the carrier 101. The float 100 can be carried to the desired area by rotating the propeller 109 of the carrier 101. As soon as it reaches the desired point, the clip 103 is disengaged from the suspension member 102 by pulling the fishing line 105, letting the carrier 101 sink down to serve as a weight and turning the float into an upright position. However, on wavy and rolling water like the sea, the fishing line 105 is easily pulled and tensioned by the waves or rolling water, disengaging the clip 103 from the suspension member 102 and stopping the float 100 before it reaches the aimed for point. Besides, even when the float 100 is stopped at a desired point, it is difficult to keep watching on the upright float 100 in wavy or rough conditions.

Fig. 15 shows a float of the kind described in Japanese Utility Model Publication 49-794. A float body 120 has therein a battery 121 and a motor 122 for driving a screw propeller 126 which urges the float body 120 in a direction determined by a rudder 123. As soon as the float body 120 reaches a desired point, an operating bar 125 which retains the fishing line 124 is moved in a direction opposite to the travelling direction of the float body 120 by pulling the fishing line 124, thereby turning off the switch of the drive for the propeller 126 to stop the bait-mounted hooks at a desired point. However, the fishing line 124 may be tensioned by waves or by wind, in which case the float body 120 may be stopped by movement of the operating bar 125 before it reaches the desired spot. With the arrangement as illustrated there is also a danger that the float body 120 may deviate from the desired direction as a result of the screw 126 or the rudder 123 being fouled by the fishing line 124.

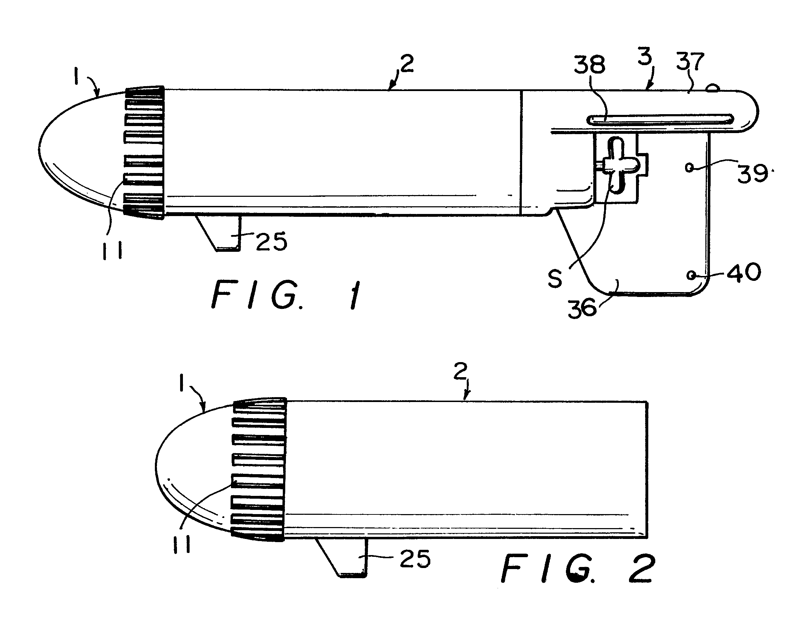

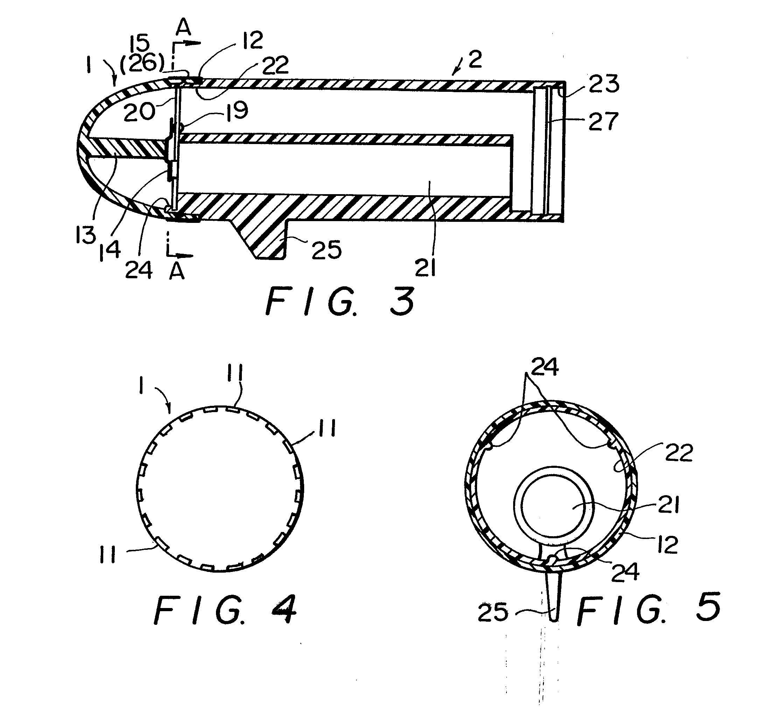

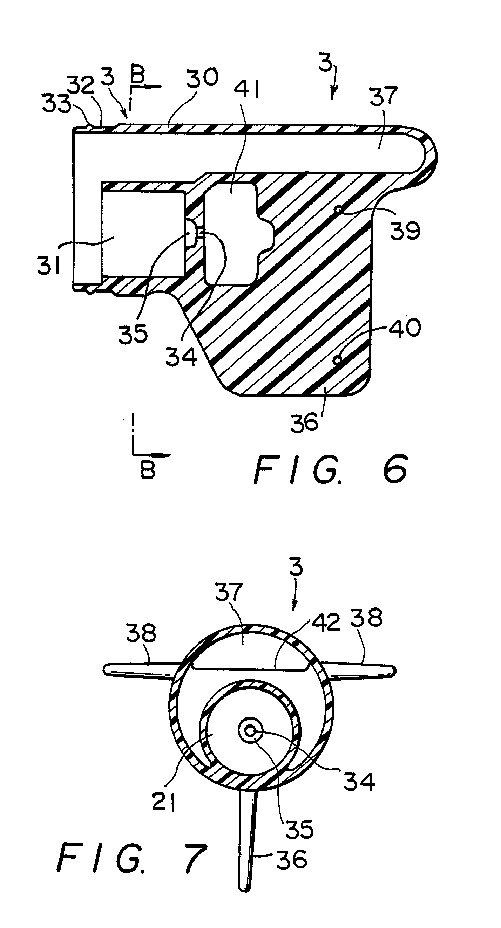

The embodiment of float illustrated in Figs. 1 to 7 and constructed in accordance with the present invention effectively has a body formed with three sections, namely a head section, a generally cylindrical body section and a tail section.

As will be seen, in this embodiment, the head section 1 is formed of a sythetic resin material in a generally dome-like streamlined shape to reduce the water resistance, and is provided with a plurality of longitudinal water-cutting grooves 11 at predetermined intervals around the circumference of the rear portion of the head section 1 where it is connected to the body section 2, thereby assisting rectilinear propagation of the float. The inner surface of the head section 1 adjacent its periphery is formed with a stepped portion 12 in which is en-

gaged a correspondingly stepped portion 22 formed on the outer periphery of the fore end of the body section 2, enabling the head section 1 to be readily connected to the body section 2. In place of the stepped portions 12 and 22, screw threads may be formed on the inner periphery of the head section 1 and on the outer periphery of the body section 2 for coupling these two sections.

A columnar projection 13 extends axially from the inner side of the fore end of the head section 1, the columnar projection 13 having a resilient electrode plate 14 fixed to the inner free end thereof. The electrode plate 14 has one end thereof in contact with an electrode of a battery which is accommodated as a power source in the body section 2 as will be described hereinlater, and has the other end in contact with a connecting plate 19 fixed on a lid member 20 which is held in place at the junction of the head and body sections 1 and 2 by projections 24.

The afore-mentioned body section 2 is formed of a synthetic resin material in a generally cylindrical shape, and is internally provided with an eccentrically located cylindrical battery chamber 21 which is open at both ends. In this particular embodiment, the battery chamber 21 is dimensioned to accommodate a couple of batteries in series.

As mentioned, the battery chamber 21 is provided within the cylindrical body section 2 in an eccentric position. Since the batteries are relatively heavy, this construction serves to stabilise the centre of gravity of the float when batteries are accommodated therein, while leaving a large air chamber within the cylindrical body portion to impart large buoyancy to the float.

The body section 2 which is connected to the head section 1 by means of the stepped portion 22 or a screw thread as described hereinbefore is provided with a stepped portion 23 and a circumextending groove 27 on the inner periphery of its rear end portion thereby to connect same to the tail section 3. More particularly, a locking portion 33, here in the form of a circumextending projection, provided on a stepped portion 32 on the outer periphery of the fore end of the tail section 3 is engaged with the groove 27 to couple the tail section 3 with the body section 2. If desired, they may be coupled through screw threads as described hereinbefore in connection with the coupling of the head and body sections.

The lid member 20 is held in place at the junction of the head and body sections 1 and 2 as described hereinbefore so as to hold the batteries stably in the battery chamber 21 in a predetermined position. In this instance, the lid member 20 is detachably held in position by means of a plurality of projections provided on the inner periphery of the body section 2. Alternatively, the lid member 20 may form a press fit in the body section where there is no need for removing the lid member 20.

Further, a fore guide fin 25 is provided in a position where, in use of the float, it will extend downwardly on the longitudinal centre line of the body section 2. This fore guide fin 25 is provided for improving rectilinear or straight forward movements and stability of the float, serving, together with vertical tail fin 36 in tail section 3 (described in more detail below), to prevent turn-over and spinning of the float itself due to rotation of the propeller screw S.

The tail section 3, which is connected to the rear end portion of the body section 2 by the locking portion 33 on the stepped portion 32 on the outer periphery of its fore end portion as described hereinbefore, is provided with a motor chamber 3l eccentrically located in the tail section contiguously with the battery chamber 2l of body section 2, a motor being accommodated in the motor chamber 3l. Thus, in use the float will float with the motor chamber in the lower portion of the float. Above and behind the motor chamber 3l in the orientation in which the float floats the tail section 3 has an extension of the air chamber into a region 37 bounded by a boundary wall 42 generally parallel to and above the horizontal (in the floating orientation) diametric plane. Tailplanes 38 project laterally of the tail section 3 at positions in the vicinity of the bottom portion of the extended air chamber 37 and in directions which are horizontal in the floating orientation. A tail fin 36 which extends vertically downwardly in the floating orientation is formed centrally on the boundary wall 42 integrally with the remainder of tail portion 3. The tail fin extends in a direction perpendicular to the tailplanes 38. The tail portion 3 has a through opening 4l formed by notching part of the vertical tail fin 36 providing space for mounting a propeller screw S behind the motor chamber 3l. Provided in the rear wall of the motor chamber 3l are a bore 34 for receiving the motor shaft for mounting the screw S and a recess 35 for receiving a bearing.

The extended air space 37 with its flat boundary wall, and the tailplanes 38 projecting laterally at positions adjacent the air chamber 37 ensure stabilized surface travel of the float and to prevent spinning movements of the float itself which might otherwise be induced by rotation of propeller screw S in the tail section 3 due to the generally cylindrical shapes of the head and body sections l and 2. The centre of gravity and of buoyancy are stabilized by the battery chamber 2l, motor chamber 3l and the vertical tail fin 36 remaining generally in the same orientation.

The vertical tail fin 36 is provided with a hole 39 in its rear upper portion for tying the fore end of a fishing line from a rod or reel, and a hole 40 in a rear lower portion for tying the upper end of a hook set or tackle. Accordingly, the direction of the float can be changed easily by swinging the fishing line sidewards.

The reference numeral 30 denotes a hole which is useful for marking or for mounting a flash lamp or the like, and which is normally sealed.

The fishing line tied to the hole 39 in an upper rear portion of the vertical tail fin 36 is towed straight to an off-shore point by rectilinear propagation of the self-travelling float propelled by the rotation of the screw S which is in turn driven by the motor. The direction of travel of the float can be changed by manipulating the fishing rod in such a manner as to pull the line, thereby to direct the float to an aimed direction.

When all of the fishing line is drawn out, it is maintained in tensioned state by the propelling force of the motor. Therefore, a pull of hooked or biting fish is transmitted to the gripped rod even if the float at a remote point cannot be seen. No matter whether the float is running or floating, it rises up on the water surface like an upright standing float as soon as fish is caught on the hook.

The self-propelling float can progress across or against the tidal current on the sea, and, at a rocky waterside where casting is difficult, one can simply drop the line into water and let the float bring the line to a desired point while adjusting the direction of the float by manipulating the rod and line. Dragging or trolling type fishing can also be enjoyed by running the float.

Referring now to Figs. 8 to l2, there is shown a second embodiment of float in accordance with the present invention. Although the float has three sections, namely, the head, body, and tail sections as in the above-described first embodiment, the body of the float of the second embodiment is formed by just two parts, namely, a main body section 64 which integrally comprises the body and tail portions 62 and 63, and a head section 5l.

To facilitate the fabrication, the main body section 54 is splittable into symmetrical halves along a joint portion 65 indicated by line IV-IV in Fig. 9.

The head section 5l is formed in a streamlined generally dome-like shape in outer configuration, and is provided with a number of rib-like projections 52 at predetermined intervals around the circumference thereof, forming deep grooves 53 between the respective projections 52. The intervals between the projections may be broadened so that the float cuts through the water as it runs on the surface.

A screw thread 66 is tapped on a stepped portion 54 on the inner periphery of the head section 5l, for engagement with a screw thread 67 tapped on a stepped portion 66 on the outer periphery of the fore end portion of the main body section 64. Thus, the head and main body sections 5l and 64 are joined by engaging the screw threads 55 and 67.

A lid member 60 is gripped between the afore-mentioned stepped portion 54 on the inner periphery of the head section 5l and the fore end of the stepped portion 66 on the outer periphery of the main body section 64, and an O-ring is interposed between the fore end of the stepped portion 54 on the head section 5l and a base portion of the stepped portion 66 on the main body section 64 to seal the joint of the head and main body sections 5l and 64.

The tail portion 63 of the main body section 64, is provided with a motor chamber 69 for mounting a motor 68. The motor chamber 69 has a centre plane Y-Y (Fig. II) in an eccentric position beneath the horizontal diametric plane X-X of the main body section 64 (referring to the floating orientation) and is provided with a bore 7l receiving the shaft 70 of the motor 68 and with recess 72 for a bearing. The body portion 62 of the main body section 64 is provided with part-annular battery holders 73 at predetermined intervals with their respective centres located in the plane Y-Y, to hold batteries D which are connected through lead lines 75 to a switch 74 mounted on an upper portion of the main body section 64.

Above the afore-mentioned plane X-X, an air chamber 78 with a boundary wall 77 extends to the rear of the motor chamber 69 in the tail portion 63 of the main body section 64. Tailplanes 79 are projected laterally of the extended air chamber 78, and a tail fin 80 extending vertically downwardly in the floating orientation from the centre line of boundary wall 77 is perpendicular to the tailplanes 79. A screw-mounting notch is formed in the vertical tail fin 80.

A projection with a hole 83 for connecting a fishing line 82 is formed to the rear end of the extended air chamber 78, and a hole 84 for connecting a lead is formed in a lower rear portion of the vertical tail fin 80. Upon threading the head section 5l tightly on the main body section 64, the batteries D are pressed into conductable positions by a conical spring fixed on the lid member 60 which is securely fixed between the head and main body sections 5l and 64. The motor is started by turning on the switch 74, rotating the screw S to propel the float.

Indicated at 86 is a light emitting diode which permits the angler to confirm the float position in night fishing.

As in the first described embodiment, the batteries are mounted in the body portion of the main body section 64 in position below the horizontal central plane in the floating orientation and therefore serve to stabilize the centres of gravity of and buoyancy of the float, in addition to the tailplanes 79 and the existence of the air chamber 78.

## Claims

l. A float comprising a hollow body formed of a synthetic resin material, and adapted to accommodate one or more batteries therewithin, and a motor accommodated within the body and coupled to a propeller screw for propelling said float; characterised in that a battery chamber or holder for accommodating said battery is provided eccentrically of a generally cylindrical portion of said body in a region which forms a vertically lower region of said cylindrical portion in use of the float; in that a motor chamber accommodating said motor is provided in a tail portion of said body contiguously with said battery chamber or holder; in that an air chamber extends axially to the rear of said motor chamber and has a boundary generally parallel to a longitudinal diametric plane of said cylindrical portion, and forming in use of the float a horizontal bottom wall to said air chamber extension above the horizontal medial plane of the cylindrical portion; in that tailplanes extend laterally of the float body in the region of said extended air chamber in directions which are horizontal in use of the float; and in that a tail fin projects from said boundary wall perpendicularly to said tailplanes in a direction which is vertically downward in use of the float.

2. A float according to Claim l, further characterised in that said body comprises a head section of a streamlined generally dome-like shape in outer configuration, said generally cylindrical body section, and a tail section.

3. A float according to Claim l, further characterised in that said float body comprises a head section of a streamlined generally dome-like shape in outer configuration. and a main body section integrally comprising said generally cylindrical body and tail section.

4. A float according to Claim 3, wherein said main body section is formed by joining two split parts.

FIG. 1

FIG. 2

0 254 485

FIG. 3

FIG. 4

FIG. 5

FIG. 6

FIG. 7

*F I G. 8*

*F I G. 9*

FIG. 10

FIG. 13

0 254 485

FIG. 11

FIG. 12

0 254 485

0 254 485

F I G. 14

F I G. 15

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 739 516  (J.H. HOLLING) <br> * column 2, lines 44-53 * | 1 | A 01 K  93/00 |
| A | US-A-3 710 500  (J.B. PENA) <br> * figure 1 * | 1 | |
| A | US-A-3 613 284  (E.F. ANDERSON) <br> * figure 1 * | 2,3 | |
| D,A | JP-Y-49 000 794 (J. TAKEYOSHI) <br> * figure * | 1 | |
| D,A | JP-Y-61 000 787 (ASAHI TETSUKOSO LTD.) <br> * figures 1, 3 * | 1 | |

---

|  | TECHNICAL FIELDS SEARCHED (Int. Cl.4) |
|---|---|
| | A 01 K  91/00 <br> A 01 K  93/00 |

The present search report has been drawn up for all claims

| Place of search | Date of completion of the search | Examiner |
|---|---|---|
| BERLIN | 13-10-1987 | WUNDERLICH J E |